(19) Europäisches Patentamt

European Patent Office

Office européen des brevets

(11) **EP 2 653 483 A1**

(12) **EUROPEAN PATENT APPLICATION**
published in accordance with Art. 153(4) EPC

(43) Date of publication:
**23.10.2013 Bulletin 2013/43**

(21) Application number: **11849751.0**

(22) Date of filing: **17.11.2011**

(51) Int Cl.:
**C08F 2/18** (2006.01)          **C08F 2/32** (2006.01)
**C08F 20/06** (2006.01)

(86) International application number:
**PCT/JP2011/076555**

(87) International publication number:
**WO 2012/081355 (21.06.2012 Gazette 2012/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2010 JP 2010280810**

(71) Applicant: **Sumitomo Seika Chemicals Co., Ltd.
Kako-gun, Hyogo 675-0145 (JP)**

(72) Inventors:
• **TAKATORI, Junichi**
  **Himeji-shi**
  **Hyogo 672-8076 (JP)**
• **ISOKAWA, Sho**
  **Himeji-shi**
  **Hyogo 672-8076 (JP)**
• **ONODA, Yuichi**
  **Himeji-shi**
  **Hyogo 672-8076 (JP)**
• **UEDA, Koji**
  **Himeji-shi**
  **Hyogo 672-8076 (JP)**

(74) Representative: **Vossius & Partner
Siebertstrasse 4
81675 München (DE)**

(54) **METHOD FOR PRODUCING WATER-ABSORBING RESIN**

(57) Object
The main object of the present invention is to provide a method for producing water-absorbent resin having reduced discoloration resulting from high-temperature treatment, small amounts of fine powder and coarse powder, and a narrow particle size distribution.
Means for achieving the object
A method for producing water-absorbent resin, comprising:
(1) Step 1, in which a water-soluble ethylenically unsaturated monomer is subjected to a reversed-phase suspension polymerization in a petroleum hydrocarbon dispersion medium in which a surfactant is dissolved, thereby forming a slurry in which primary particles are dispersed, and
(2) Step 2, in which the slurry obtained in Step 1 is cooled to partially precipitate the surfactant, and then a (water-soluble ethylenically unsaturated monomer is polymerized in the slurry to agglomerate the primary particles, thereby forming water-absorbent resin,

wherein the surfactant is a sucrose fatty acid ester in which the monoester content is 25% by mass or less, the tetraester content is 10% by mass or more, and the content of tetra or higher esters is 30% by mass or less.

**Description**

Technical Field

The present invention relates to a method for producing water-absorbent resin. More specifically, the present invention relates to a method for producing water-absorbent resin having reduced discoloration resulting from high-temperature treatment, small amounts of fine powder and coarse powder, and a narrow particle size distribution.

Background Art

Water- absorbent resin have been widely used in various fields, including for hygienic materials, such as disposable diapers and sanitary napkins, horticultural materials, such as water- retaining agents and soil conditioners, and industrial materials, such as water- blocking materials and agents for preventing dew condensation, and the like.

Known examples of the water-absorbent resin are hydrolysates of starch-acrylonitrile graft copolymers, neutralized products of starch-acrylate graft copolymers, saponified products of vinyl acetate-acrylic ester copolymers, and crosslinked polymers of partially neutralized acrylic acid compound.

Water- absorbent resin used in absorbent articles such as hygienic materials are desired to be white to provide a feeling of cleanliness and not to produce a feeling of foreign matter when formed into a composite material by mixing the particles with a white crushed pulp in an absorbent material.

In recent years, there is increasing demand for thinner and lighter absorbent articles from the viewpoint of design, portability convenience, and transport efficiency. A generally employed method for thinning absorbent articles is, for example, a method in which the amount of bulky hydrophilic fiber, such as crushed wood pulp, having a low absorption property is reduced, and the amount of water-absorbent resin having a high absorption property is increased. Water-absorbent resin contained in an absorbent material in a high concentration is desired to have a high absorption magnification and an excellent liquid diffusion property. Further, the absorbent material is desired to have an excellent skin feel and flexibility. The problem of discoloration becomes more crucial as the proportion of the water-absorbent resin particle increases.

In general, the liquid diffusion property decreases as the proportion of fine powder in water-absorbent resin increases. That is, when the fine powder in the water-absorbent resin swells by absorbing a body fluid, etc., a path through which the body fluid, etc., is diffused is likely to be blocked, which easily causes what is called "gel blocking". Since an absorbent material in which gel blocking occurs has a bad liquid diffusion property, it cannot satisfactorily exhibit its intrinsic effect, and the amount of re-wet liquid increases.

On the other hand, since a thin-shaped absorbent material includes a small amount of hydrophilic fiber and a large proportion of water-absorbent resin, when water-absorbent resin containing a high proportion of coarse powder is used, the absorbent material becomes extremely rough, resulting in greatly impaired flexibility. Such an absorbent material cannot be used as a hygienic material, e.g., a disposable diaper whose skin feel is considered important. Therefore, water-absorbent resin used for a thin-shaped absorbent material having an excellent water absorption property and a skin feel preferably have small amounts of fine powder and coarse powder, and a narrow particle size distribution.

Known examples for producing water-absorbent resin include an aqueous-solution polymerization, a reversed-phase suspension polymerization, and the like. For example, the following methods are suggested: a method for obtaining water-absorbent resin using a specific sucrose fatty acid ester as a surfactant (see Patent Literature 1), a method comprising producing water-absorbent resin, cooling the particles, again adding a monomer to the polymerization reaction solution (slurry) in which the polymer particles in the first stage are suspended, in a state such that a surfactant, such as a sucrose fatty acid ester, is precipitated, and polymerizing the mixture to thereby give water-absorbent resin (see Patent Literature 2), and the like.

Citation List

Patent Literature

  PTL 1: Japanese Unexamined Patent Publication No. 2006-001976
  PTL 2: Japanese Unexamined Patent Publication No. H3-227301

Summary of Invention

Technical Problem

Because of high-temperature treatment in a drying step and a post crosslinking step, the water-absorbent resin disclosed in Patent Literature 1 become colored entirely by a surfactant that is required for a reversed-phase suspension polymerization, and this discoloration causes a problem when the water-absorbent resin is used in an absorption article such as a hygienic material that requires a feeling of cleanliness. In Patent Literature 2, the amount of fine powder or coarse powder is relatively large, and the particle size distribution is wide. Accordingly, the water-absorbent resin obtained in Patent Literature 2 is not sufficient to use in a thin-shaped absorbent material that is excellent in a water absorption property and skin feel.

The main object of the present invention is to provide a method for producing water-absorbent resin having reduced discoloration resulting from high-temperature treatment, small amounts of fine powder and coarse powder, and a narrow particle size distribution.

Solution to Problem

The present inventors conducted extensive research to solve the above problems. As a result, they found that by performing a reversed-phase suspension polymerization using a sucrose fatty acid ester having a specific ester distribution as a surfactant, it is possible to obtain water-absorbent resin having reduced discoloration resulting from high-temperature treatment, small amounts of fine powder and coarse powder, and a narrow particle size distribution. The present invention was accomplished based on this finding and includes embodiments as summarized below.

Item 1

A method for producing water-absorbent resin, comprising:

(1) Step 1, in which a water-soluble ethylenically unsaturated monomer is subjected to a reversed-phase suspension polymerization in a petroleum hydrocarbon dispersion medium in which a surfactant is dissolved, thereby forming a slurry in which primary particles are dispersed, and
(2) Step 2, in which the slurry obtained in Step 1 is cooled to partially precipitate the surfactant, and then a water-soluble ethylenically unsaturated monomer is polymerized in the slurry to agglomerate the primary particles, thereby forming water-absorbent resin,

wherein the surfactant is a sucrose fatty acid ester in which the monoester content is 25% by mass or less, the tetraester content is 10% by mass or more, and the content of tetra or higher esters is 30% by mass or less.

Item 2

The method according to Item 1, wherein the petroleum hydrocarbon dispersion medium further comprises at least one polymeric dispersion agent selected from the group consisting of maleic anhydride modified polyethylene, maleic anhydride modified polypropylene, maleic anhydride modified ethylene propylene copolymers, oxidized polyethylene, and ethylene acrylic acid copolymers.

Item 3

The method according to Item 1 or 2, wherein the water-soluble ethylenically unsaturated monomer is at least one member selected from the group consisting of (meth)acrylic acids and salts thereof.

Item 4

Water-absorbent resin obtainable by using the method according to any one of Items 1 to 3, wherein the degree of yellow of thermal discoloration resistance is 20 or less.

Item 5

Water-absorbent resin obtainable by using the method according to any one of Items 1 to 3, wherein, in a particle size distribution, water-absorbent resin having a size more than 850 μm is contained in an amount of 5% by mass or less and water-absorbent resin having a size not more than 180 μm is contained in an amount of 10% by mass or less.

Advantageous Effects of Invention

Water-absorbent resin having reduced discoloration resulting from high-temperature treatment, small amounts of fine powder and coarse powder, and a narrow particle size distribution are provided according to the method for producing water-absorbent resin of the present invention.

Description of Embodiments

The method for producing water-absorbent resin according to the present invention includes the following Steps 1 and 2.

(1) Step 1, in which a water-soluble ethylenically unsaturated monomer is subjected to a reversed-phase suspension polymerization in a petroleum hydrocarbon dispersion medium in which a surfactant is dissolved, thereby forming a slurry in which primary particles are dispersed.
(2) Step 2, in which the slurry obtained in Step 1 is cooled to partially precipitate the surfactant, and then a water-soluble ethylenically unsaturated monomer is polymerized in the slurry to agglomerate the primary particles, thereby forming water-absorbent resin.

Step 1

In Step 1 of the method of the present invention, a water-soluble ethylenically unsaturated monomer is subjected to a reversed-phase suspension polymerization in a petroleum hydrocarbon dispersion medium in which a surfactant is dissolved, thereby forming a slurry in which primary particles are dispersed.
The surfactant used in Step 1 is a sucrose fatty acid ester in which the monoester content is 25% by mass or less, the tetraester content is 10% by mass or more, and the content of tetra or higher esters is 30% by mass or less.
The surfactant used in Step 1 is a sucrose fatty acid  ester obtained by esterifying sucrose and a fatty acid. The sucrose fatty acid ester is a mixture of monoester, diester, triester, tetraester, pentaester, hexaester, heptaester, or octaester.
The proportions of the monoester, diester, triester, tetraester, pentaester, hexaester, heptaester, and octaester in the sucrose fatty acid ester can be calculated using general gel permeation chromatography, etc.
The expression "tetra or higher" indicates tetra, penta, hexa, hepta, and octa. The expression "the content of tetra or higher esters is 30% by mass or less" indicates the proportion of the total amount of tetraester, pentaester, hexaester, heptaester, and octaester among various esters contained in the sucrose fatty acid ester used in the surfactant, to the sucrose fatty acid ester, expressed by % by mass.
As explained above, the sucrose fatty acid ester used in the present invention is a mixture obtained by esterifying sucrose and any fatty acid of monoester, diester, triester, tetraester, pentaester, hexaester, and octaester.
Of the esters mentioned above, since the monoester has the highest hydrophilic property, it is presumed that the monoester is likely to be present at the surface of the water-absorbent resin obtained by using the method of the present invention.
The method for producing water-absorbent resin of the present invention includes, as necessary, a treatment under high-temperature conditions such as a crosslinking treatment, a drying treatment, etc., as described below. When a high-temperature treatment is performed in a state such that the sucrose fatty  acid ester is present on the surface of the water-absorbent resin, the water-absorbent resin tends to become colored because of the presence of the sucrose fatty acid ester.
The main object of the present invention is to provide a method for obtaining water-absorbent resin with reduced discoloration. Therefore, it is necessary to reduce the amount of the monoester of the sucrose fatty acid ester present on the surface of the water-absorbent resin as much as possible.
When a sucrose fatty acid ester having a monoester content of 25% by mass or less is used as a surfactant for Step 1, water-absorbent resin having reduced discoloration resulting from high-temperature treatment can be obtained. It is presumed that a monoester is likely to be present on the surface of the water-absorbent resin; accordingly, it is preferable to use a sucrose fatty acid ester containing no monoester in the present invention. However, available sucrose fatty acid esters contain a monoester in some amount, generally in an amount of 0.1% by mass or more.
Water- absorbent resin having small amounts of fine powder and coarse powder and a narrow particle size distribution can be obtained by using as a surfactant a sucrose fatty acid ester in which the tetraester content is 10% by mass or more, and the content of tetra or higher esters is 30% by mass or less.
The sucrose fatty acid ester used as a surfactant in Step 1 is a mixture of a compound that is obtained by esterifying fatty acid and hydroxy groups of sucrose, as described above. Examples of the fatty acid are not particularly limited, and include those having a carbon number of 12 to 22.
Specific examples of the fatty acid include palmitic acid, stearic acid, oleic acid, etc. In the sucrose fatty acid ester of the present invention, the same kind of fatty acid or  different kinds of fatty acids may be esterified with hydroxy groups in a sucrose molecule.
Although the amount of the sucrose fatty acid ester used as a surfactant is not particularly limited, it is generally 0.05 to 5 parts by mass and preferably 0.1 to 3 parts by mass relative to 100 parts by mass of the water-soluble ethylenically unsaturated monomer.

In Step 1, a petroleum hydrocarbon dispersion medium is used as a dispersion medium in a reversed-phase suspension polymerization. The petroleum hydrocarbon dispersion medium is not particularly limited, and examples thereof include n-hexane, n-heptane, n-octane, ligroin, and like aliphatic hydrocarbons; cyclopentane, methylcyclopentane, cyclohexane, methylcyclohexane, and like alicyclic hydrocarbons; benzene, toluene, xylene, and like aromatic hydrocarbons; etc. These petroleum hydrocarbon dispersion mediums may be used singly or in combination.

Among these, n-hexane, n-heptane, and cyclohexane are preferably used as petroleum hydrocarbon dispersion medium because they are industrially easily available, stable in quality, and inexpensive. From the viewpoint of the same, as an example of a mixture of the above, commercially available Exxsol™ Heptane Fluid (produced by ExxonMobil Co., Ltd.: containing n-heptane and isomers in an amount of 75-85% by mass) is preferably used.

The amount of the petroleum hydrocarbon dispersion medium used is not limited, and is generally 50 to 600 parts by mass, preferably 100 to 550 parts by mass relative to 100 parts by mass of the water-soluble ethylenically unsaturated monomer in order to easily remove the heat generated in the polymerization and readily control the reaction temperature in the reversed suspension polymerization.

In the method for producing the water-absorbent resin of the present invention, 10 to 200 parts by mass of water may be used relative to 100 parts by mass of the petroleum hydrocarbon dispersion medium. In order to attain excellent industrial production and preferable economic efficiency, the amount of water is preferably 10 parts by mass or more. To attain a good dispersion state of the water-absorbent resin and to obtain water-absorbent resin containing a low proportion of coarse powder, the amount of water is preferably 200 parts by mass or less.

The water- soluble ethylenically unsaturated monomer used in Step 1 is not particularly limited, and examples thereof include (meth) acrylic acid (herein "acryl" and "methacryl" collectively refer to "(meth) acryl") and salts thereof, 2- (meth) acrylamide- 2- methylpropanesulfonic acid, and salts thereof; nonionic monomers such as (meth) acrylamide, N, N- dimethyl (meth) acrylamide, 2- hydroxyethyl (meth) acrylate, N- methylol (meth) acrylamide, and polyethylene glycol mono (meth) acrylate; amino group- containing unsaturated monomers such as N, N- diethylaminoethyl (meth) acrylate, N, N- diethylaminopropyl (meth) acrylate, diethylaminopropyl (meth) acrylamide, and quaternary compounds thereof. These water- soluble ethylenically unsaturated monomers may be used singly or in combination.

Among these, acrylic acid, salts thereof, methacrylic acid, salts thereof, acrylamide, methacrylamide, and N, N-dimethylacrylamide are preferably used as water-soluble ethylenically unsaturated monomers because they are easily available industrially. More preferable examples include acrylic acid, salts thereof, methacrylic acid, and salts thereof.

To raise the dispersion efficiency in the petroleum hydrocarbon dispersion medium, the water-soluble ethylenically unsaturated monomer may be used in the form of an aqueous solution when subjected to a reversed-phase suspension polymerization. Although the concentration of the monomer in the aqueous solution is not particularly limited, it is generally from 20% by mass to a saturated concentration, preferably from 25 to 70% by mass, and more preferably from 30 to 55% by mass.

If the water-soluble ethylenically unsaturated monomer has an acid group such as (meth)acrylic acid, 2-(meth) acrylamide-2-methylpropanesulfonic acid, etc., the acid group may be neutralized in advance by an alkaline neutralizing agent, as necessary. Although examples of the alkaline neutralizing agent are not particularly limited, they include alkali metal salts such as sodium hydroxide and potassium hydroxide; ammonia and the like. In particular, these alkaline neutralizing agents can be used in the form of an aqueous solution to facilitate neutralizing operation. The alkaline neutralizing agents can be used singly or in combination.

The degree of neutralization of all the acid groups contained in the water-soluble ethylenically unsaturated monomer with the alkaline neutralizing agent is not particularly limited, generally 10 to 100% by mol, and preferably 30 to 80% by mol from the viewpoint of increasing osmotic pressure of the resulting water-absorbent resin to increase the water absorption property, and not causing any disadvantages in safety or the like due to the presence of an excess alkaline neutralizing agent.

Using a crosslinking agent, if necessary, the polymer chain in the primary particles obtained by the polymerization of the monomer can be cross- linked when the water- soluble ethylenically unsaturated monomer is subjected to the reversed- phase suspension polymerization in Step 1. A crosslinking agent (herein referred to as an "internal crosslinking agent") is not particularly limited, but those having two or more polymerizable unsaturated groups can be used. Examples of the crosslinking agent include di- or tri- (meth) acrylic acid esters of polyols such as (poly) ethylene glycol (for example, "polyethylene glycol" and "ethylene glycol" as used herein collectively refer to "(poly) ethylene glycol"), (poly) propylene glycol, trimethylolpropane, glycerol polyoxyethylene glycol, polyoxypropylene glycol, and (poly) glycerol; unsaturated polyesters obtained by reacting the above- mentioned polyol with an unsaturated acid, such as maleic acid and fumaric acid; bisacrylamides, such as N, N'- methylenebis (meth) acrylamide; di- or tri (meth) acrylic acid esters obtained by reacting a polyepoxide with (meth) acrylic acid; carbamyl esters of di (meth) acrylic acid obtained by reacting a polyisocyanate, such as tolylenediisocyanate or hexamethylenediisocyanate, with hydroxyethyl (meth) acrylate; allylated starch; allylated cellulose; diallyl phthalate; N, N', N"- triallyl isocyanurate; and divinylbenzene.

As the internal crosslinking agent, in addition to the aforementioned compounds having two or more polymerizable unsaturated groups, compounds having two or more other reactive functional groups can be used. Examples thereof include glycidyl group-containing compounds, such as (poly)ethylene glycol diglycidyl ethers, (poly)propylene glycol diglycidyl ethers, and (poly)glycerol diglycidyl ethers; (poly)ethylene glycol; (poly)propylene glycol; (poly)glycerol; pentaerythritol; ethylenediamine; polyethyleneimine; and glycidyl(meth)acrylate. These internal crosslinking agents can be used singly or in combination.

From the viewpoint of achieving an excellent reaction property at low temperatures, it is preferable to use (poly) ethylene glycol diglycidyl ethers, (poly)propylene glycol diglycidyl ethers, and (poly)glycerol diglycidyl ethers; N,N'-methylenebis acrylamide, etc., as an internal crosslinking agent.

The internal crosslinking agent may be added to a dispersion medium for use; however, to exhibit the effect of the internal crosslinking agent more efficiently, adding the internal crosslinking agent to the aforementioned monomer is preferable.

To sufficiently raise the absorption property of the resulting water-absorbent resin, the amount of the internal crosslinking agent used may be preferably 0 to 1% by mol, and more preferably 0.0001 to 0.5 % by mol, relative to the total amount of the monomer used in Step 1.

In Step 1, a polymeric dispersion agent can be used together with the sucrose fatty acid ester. The polymeric dispersion agent is not particularly limited, but examples thereof include maleic anhydride- modified polyethylene, maleic anhydride- modified polypropylene, maleic anhydride- modified ethylene- propylene copolymers, maleic anhydride-modified EPDM (ethylene- propylene- diene terpolymer), maleic anhydride- modified polybutadiene, ethylene- maleic anhydride copolymers, ethylene- propylene- maleic anhydride copolymers, butadiene- maleic anhydride copolymers, oxidized polyethylene, ethylene- acrylic acid copolymers, ethyl cellulose, and ethyl hydroxyethyl cellulose. These polymeric dispersion agents can be used singly or in combination.

Of these, maleic anhydride-modified polyethylene, maleic anhydride-modified polypropylene, maleic anhydride-modified ethylene-propylene copolymers, oxidized polyethylene, and ethylene-acrylic acid copolymers are preferably used from the viewpoint of dispersion stability of an aqueous ethylenically unsaturated monomer in a petroleum hydrocarbon dispersion medium.

The amount of the polymeric dispersion agent used is generally 0.1 to 5 parts by mass and preferably 0.2 to 3 parts by mass relative to 100 parts by mass of the monomer used in Step 1 to keep good dispersion state of the water-soluble ethylenically unsaturated monomer in the petroleum hydrocarbon dispersion medium, and to obtain a dispersion effect according to the use amount.

When the water- soluble ethylenically unsaturated monomer is polymerized by the reversed- phase suspension polymerization in Step 1, a radical polymerization initiator is generally used. Examples of the radical polymerization initiator include persulfates, such as potassium persulfate, ammonium persulfate, and sodium persulfate; peroxides such as, methyl ethyl ketone peroxide, methyl isobutyl ketone peroxide, di- t- butyl peroxide, t- butyl cumyl peroxide, t- butyl peroxyacetate, t- butyl peroxyisobutylate, t- butyl peroxypivalate, and hydrogen peroxide; and azo compounds, such as 2, 2- azobis (2- amidinopropan) dihydrochloride, 2, 2'- azobis [2- (N- phenylamidino) propane] dihydrochloride, 2, 2'-azobis [2- (N- allylamidino) propane] dihydrochloride, 2, 2'- azobis {2- [1- (2- hydroxyethyl)- 2- imidazolin- 2- yl] propane} dihydrochloride, 2, 2'- azobis {2- methyl- N- [1, 1- bis (hydroxymethyl)- 2- hydroxyethyl] propionamide}, 2, 2'- azobis [2-methyl- N- (2- hydroxyethyl)- propionamide], and 4, 4'- azobis (4- cyanovaleric acid) . These radical polymerization initiators can be used singly or in combination.

The amount of the radical polymerization initiator used is generally 0.005 to 1% by mol relative to the total amount of the monomer used in Step 1. From the viewpoint of preventing a large amount of time from using for polymerization reaction, the amount of the radical polymerization initiator is preferably 0.005 % by mol or more. From the viewpoint of preventing sudden polymerization reaction, the amount of the radical polymerization initiator is preferably 1% by mol or less.

Note that the radical polymerization initiator can be used as a redox polymerization initiator in combination with a reducing agent such as sodium sulfite, sodium hydrogen sulfite, ferrous sulfate, and L-ascorbic acid.

In Step 1, a chain transfer agent may be used to control the absorption property of the water-absorbent resin obtained by using the method of the present invention. Examples of the chain transfer agent include hypophosphites, thiols, thiolic acids, secondary alcohols, amines, and the like.

The temperature of the polymerization reaction in the reversed-phase suspension polymerization method in Step 1 varies depending on a radical polymerization initiator used, and it is generally 20 to 110°C, and preferably 40 to 90°C. To prevent the polymerization speed from decreasing and the polymerization time from increasing, the polymerization temperature is preferably 20°C or more. To remove polymerization heat and perform smooth polymerization reaction, the polymerization temperature is preferably 110°C or less.

In the reversed-phase suspension polymerization method of Step 1, the completion of the polymerization reaction can be confirmed based on the phenomenon in which the temperature of the polymerization reaction starts to fall after reaching the highest point. Specifically, the reaction time is 0.1 to 4 hours.

Step 2

In Step 2 of the method of the present invention, the slurry obtained in Step 1 is cooled to partially precipitate the surfactant, and then a water-soluble ethylenically unsaturated monomer is polymerized in the slurry to agglomerate the primary particles to form water-absorbent resin.

In Step 2, the water-soluble ethylenically unsaturated monomer added to the slurry obtained in Step 1 is absorbed in the primary particles that are dispersed in the slurry, and the primary particles are agglomerated as the monomer is polymerized, thereby forming water-absorbent resin. This step also includes the step of partially precipitating the surfactant dissolved in the slurry by cooling the slurry obtained in Step 1.

The method of partially precipitating the surfactant in the reaction system in Step 2 is not particularly limited, and for example, the following methods can be used.

(i) A method in which the slurry containing the dispersed primary particles obtained in Step 1 is cooled before the addition of a water-soluble ethylenically unsaturated monomer, thereby partially precipitating the surfactant.

(ii) A method in which a water-soluble ethylenically unsaturated monomer cooled in advance is added to a slurry containing the dissolved primary particles obtained in Step 1 to partially precipitate the surfactant while cooling the reaction system in Step 2.

(iii) After a water-soluble ethylenically unsaturated monomer is added to the slurry containing the dissolved surfactant obtained in Step 1, the reaction system is cooled, thereby partially precipitating the surfactant.

Specifically in Step 2, regardless of the timing of the addition of the water-soluble ethylenically unsaturated monomer, polymerization reaction of the monomer may be performed after the slurry obtained in Step 1 is cooled to partially precipitate the surfactant, and the primary particles are agglomerated to form water-absorbent resin.

The degree of the precipitation of the surfactant according to the aforementioned method is not particularly limited, and can be confirmed such as according to turbidity or with the naked eye.

For example, when the embodiment (i) mentioned above is used as a method for partially precipitating the surfactant, Step 2 of the method of the present invention is as follows.

(Step 2-A) After cooling the slurry obtained in Step 1 to partially precipitate the surfactant, a water-soluble ethylenically unsaturated monomer is added to the slurry. Thereafter, the water-soluble ethylenically unsaturated monomer is polymerized in the slurry, and the primary particles are agglomerated to form water-absorbent resin.

Alternatively, when the embodiment (ii) mentioned above is used as a method for partially precipitating the surfactant, Step 2 of the method of the present invention is as follows.

(Step 2- B) After adding the water- soluble ethylenically unsaturated monomer cooled in advance to the slurry obtained in Step 1, the water- soluble ethylenically unsaturated monomer is polymerized in the slurry to agglomerate the primary particles to form water- absorbent resin.

Alternatively, when the embodiment (iii) mentioned above is used as a method for partially precipitating the surfactant, Step 2 of the method of the present invention is as follows.

(Step 2- C) After adding the water- soluble ethylenically unsaturated monomer to Step 1, the mixture is cooled to partially precipitate the surfactant. Thereafter, the water- soluble ethylenically monomer is polymerized in the slurry to agglomerate the primary particles to form water- absorbent resin.

In Step 2, the temperature to partially precipitate the surfactant is preferably 5 to 40°C, and more preferably 10 to 30°C. By precipitating the surfactant within such a temperature range, water-absorbent resin having a small amount of fine powder and a narrow particle size distribution can be obtained.

To maintain the dispersion stability of the primary particles in the slurry obtained in Step 1, and to obtain water-absorbent resin having a small amount of coarse powder and a narrow particle size distribution, the precipitation temperature is preferably 5°C or more. To prevent excess diffusion of the water-soluble ethylenically unsaturated monomer added in Step 2 in the slurry and to obtain water-absorbent resin having a small amount of fine powder, the precipitation temperature is preferably 40°C or less.

In Step 2, regarding the kinds of the water-soluble ethylenically unsaturated monomer added to the slurry after cooling, neutralization treatment performed as necessary, concentration of the monomer when used in the form of an aqueous solution, etc., those detailed in Step 1 can be used.

To obtain suitably agglomerated water-absorbent resin, the amount of the water-soluble ethylenically unsaturated monomer used in Step 2 is 50 to 300 parts by mass, preferably 100 to 200 parts by mass, and more preferably 120 to 160 parts by mass relative to 100 parts by mass of the water-soluble ethylenically unsaturated monomer used in Step 1.

The polymerization reaction of Step 2 can be generally performed using a radical polymerization initiator, as in Step 1. The radical polymerization initiator can be suitably selected from those listed in the above section Step 1 and can be used according to the amount of the monomer used in Step 2, as in Step 1.

In Step 2, an internal crosslinking agent, a chain transfer agent, a reducing agent, and the like, can be used, if necessary. Specifically, one that is selected from those listed in Step 1 can be used according to the amount of the monomer used in Step 2, as in Step 1.

The temperature of the polymerization reaction in Step 2 varies depending on the radical polymerization initiator used, but is generally 20 to 110°C, and preferably 40 to 90°C.

The termination of the polymerization reaction in Step 2 can be confirmed based on the phenomenon in which the temperature of the polymerization reaction starts to fall after reaching the highest point. Specifically, the reaction time may be 0.1 to 4 hours.

The agglomerate of primary particles, i.e., water-absorbent resin obtained in Step 2, is also obtained in the state of a slurry. To improve productivity, it is possible to use as water-absorbent resin a compound obtained by a multistage reversed-phase suspension polymerization, which comprises adding a water-soluble ethylenically unsaturated monomer to the slurry obtained in Step 2, and performing, as in the reversed-phase suspension polymerization of Step 2, a polymerization reaction repeatedly in the third stage and after the third stage.

As described above, the agglomerate of the primary particles, i.e., the water-absorbent resin of the present invention, is in the state of gel that contains water, and is obtained in the state of a slurry that is dispersed in a petroleum hydrocarbon dispersion medium. To separately obtain the water-absorbent resin of the present invention, water and the medium may be removed from the slurry. Specifically, usable methods include a method in which the slurry is heated or the medium or the like is evaporated under reduced pressure, thereby removing the medium or the like, a method in which the medium or the like is removed by decantation, a method in which the medium or the like is removed using a filter, a method in which the medium or the like is removed by distillation, and the like. Of these, it is preferable to remove water and the medium by distillation of the slurry containing the agglomerate of the primary particles, i.e., water-absorbent resin, thereby obtaining the water-absorbent resin of the present invention.

A post crosslinking treatment using a post-crosslinking agent can be performed on the agglomerate of the primary particles or water-absorbent resin for the purpose of obtaining water-absorbent resin that are suitable for hygienic applications and that have increased surface crosslinking density, absorption capacity under load, absorption rate, gel strength, and other properties.

Examples of the post- crosslinking agent used for the post- crosslinking treatment include compounds having two or more reactive functional groups. Specific examples thereof include diglycidyl group- containing compounds such as (poly) ethylene glycol diglycidyl ether, (poly) glycerol (poly) glycidyl ether, (poly) propylene glycol diglycidyl ether, and (poly) glycerol diglycidyl ether; polyols such as (poly) ethylene glycol, (poly) propylene glycol, (poly) glycerol; oxetane compounds such as 3- methyl- 3- oxetane methanol, 3- methyl- 3- oxetane ethanol, and 3- ethyl- 3- oxetane ethanol; pentaerythritol; ethylenediamine; polyethyleneimine; and the like. These post- crosslinking agents may be used singly or in combination.

Of these, (poly)ethylene glycol diglycidyl ether, (poly)propylene glycol diglycidyl ether, and (poly)glycerol diglycidyl ether are preferably used as post-crosslinking agents.

The post-crosslinking agent is usually used in an amount from 0.005 to 1% by mol, and preferably from 0.01 to 0.5% by mol relative to the total amount of the monomer used in Steps 1 and 2, from the viewpoint of not lowering the absorption property of the resulting water-absorbent resin; and increasing the crosslinking density on the surface or near the surface to enhance various properties.

The post-crosslinking step using a post-crosslinking agent may be performed after polymerization reaction in Step 2, and there is no particular limitation. For example, the post-crosslinking agent may be added when the amount of water in the agglomerate of primary particles, which is the water-absorbent resin obtained in Step 2, is within the range of 1 to 400 parts by mass, preferably 5 to 200 parts by mass, and more preferably 10 to 100 parts by mass, relative to 100 parts by mass of the total amount of the water-soluble ethylenically unsaturated monomer used.

Thus, by performing the post- crosslinking treatment using the post crosslinking agent according to the amount of water contained in the agglomerate of the primary particles, which is a water- absorbent resin, crosslinking can be more suitably formed in the vicinity of the surface of the water- absorbent resin; consequently, water- absorbent resin having an excellent absorption property can be obtained. The method of adjusting the amount of water contained in the agglomerate of the primary particles, i.e., water- absorbent resin, is not particularly limited. For example, a method for removing water from the slurry containing the agglomerate of the primary particles, which is the water- absorbent resin obtained in Step 2, can be used.

The post-crosslinking agent may be added as it is, added in a form of an aqueous solution. A hydrophilic organic solvent may be used as a solvent. The hydrophilic organic solvent is not particularly limited, and examples thereof include lower alcohols such as methyl alcohol, ethyl alcohol, n-propyl alcohol, and isopropyl alcohol; ketones such as acetone and methyl ethyl ketone; ethers such as diethyl ether, dioxane, and tetrahydrofuran; amides such as N, N-dimethylformamide; sulfoxides such as dimethyl sulfoxide; and the like. These hydrophilic organic solvents may be used singly or in combination.

The reaction temperature in the post-crosslinking treatment is usually 60°C or more, preferably 70 to 200°C, and more preferably 80 to 150°C. By setting the reaction temperature to 60°C or more, post-crosslinking reaction easily proceeds, which tends to reduce the time required for the reaction. By setting the reaction temperature to 200°C or less, the decomposition and discoloration of the resulting water-absorbent resin tend to be prevented.

The reaction time of the post crosslinking treatment varies depending on the reaction temperature, kind of post-crosslinking agent, amount of the post-crosslinking agent used, etc., and cannot be determined, but the reaction time may be generally 1 to 300 minutes, and preferably 5 to 200 minutes.

After the post crosslinking treatment or when the post crosslinking treatment is not performed, water and a petroleum hydrocarbon dispersion medium may be removed to isolate water-absorbent resin, followed by a drying treatment.

The method in the drying treatment is not particularly limited. For example, heat drying, drying under reduced pressure, etc., may be used.

For example, in heat drying in which drying is performed by adding heat, the reaction temperature of the aforementioned post-crosslinking treatment may be used as the heat drying temperature. The drying time is not particularly limited, and it is generally 1 to 300 minutes and preferably 5 to 200 minutes.

The water-absorbent resin produced by using the aforementioned method may become colored when subjected to high-temperature treatment by a post-crosslinking treatment and a drying treatment included in the process for producing water-absorbent resin, adhesion to a production device such as a dryer, etc. The degree of discoloration is defined as "the degree of yellow of thermal discoloration resistance" in the present invention. The degree of yellow of thermal discoloration resistance can be measured by using the method represented by the following examples.

When the degree of yellow of thermal discoloration resistance exceeds 20, a marked discoloration can be visually confirmed, which indicates low thermal discoloration resistance. When the water-absorbent resin having such a numerical range is used in an absorbent material such as a hygienic material, the resulting material has remarkably lowered aesthetic appearance, which reduces commercial value. Since the water-absorbent resin obtained by using the method of the present invention have a degree of yellow of the thermal discoloration resistance of 20 or less, and preferably 15 or less, they can be preferably used as an absorbent material in a hygienic material or the like.

In the particle size distribution of the water-absorbent resin obtained according to the method of the present invention, water-absorbent resin more than 850 $\mu$m are contained in an amount of 5% by mass or less, and water-absorbent resin not more than 180 $\mu$m are contained in an amount of 10% by mass or less. It is preferable that water-absorbent resin having a size more than 250 $\mu$m and not more than 500 $\mu$m be contained in an amount of 60% by mass or more. Water-absorbent resin satisfying such a numerical range suppress gel blocking and attain an excellent liquid diffusion property, a good skin feel of the absorbent material itself, flexibility, and other excellent effects when used in particularly a hygienic material such as a thin-shaped absorbent material. The particle size distribution of the water-absorbent resin can be measured according to the method described in the Examples below.

The median particle size of the water-absorbent suitably used in an absorbent material or an absorbent article using the absorbent material is preferably 200 to 500 $\mu$m, and more preferably 250 to 450 $\mu$m. The water-absorbent resin obtained by using the method of the present invention satisfy the numerical range as mentioned above and are suitably used in an absorbent article. The median particle size of the water-absorbent resin can be measured according to the method described in the Examples below.

The reason why the method of the present invention can attain water-absorbent resin having reduced discoloration resulting from high-temperature treatment, small amounts of fine powder and coarse powder, and a narrow particle size distribution is not very clear, but it is presumably because of the following reason.

The water-absorbent resin obtained by using a method employing a sucrose fatty acid ester as a surfactant are in a state such that the sucrose fatty acid ester adheres to their surfaces. When the water-absorbent resin in this state are subjected to high-temperature treatment in a crosslinking step and a drying step, the sucrose fatty acid ester becomes colored, which tends to result in the discoloration of all water-absorbent resin.

The sucrose fatty acid ester used as a surfactant in Step 1 of the method of the present invention is obtained by esterifying a fatty acid, such as a stearic acid, with eight hydroxy groups of the sucrose as described above. The discoloration property is greatly affected by a monoester. The discoloration effect is reduced as the ester substitution degree is increased, e.g., in the order of di, tri, tetra, and penta. For this reason, when the ester distribution of monoester exceeds 25% by mass, water-absorbent resin are likely to become colored by high-temperature treatment, and presumably, the degree of yellow of thermal discoloration resistance is likely to exceed 20.

In Step 2 of the method of the present invention, the particle size of the primary particles increases when the surfactant is precipitated in the slurry in which the primary particles obtained in Step 1 are dispersed, since almost no effect of the surfactant is exhibited. On the other hand, the monomer is uniformly absorbed in the primary particles when the surfactant is dissolved without precipitation, since the water-soluble ethylenically unsaturated monomer used in Step 2 is uniformly dispersed in the slurry.

The sucrose fatty acid ester, which is a surfactant, has a hydrophilic or lipophilic property depending on the ester substitution number of a fatty acid. In the method of adjusting the particle size distribution of the water-absorbent resin obtained by using the method of the present invention, an ester of mono, di, or the like, having a low lipophilic property is first precipitated when the surfactant is partially precipitated in Step 2, as described above, by reducing the temperature of the slurry in which the primary particles obtained in Step 1 are dispersed. Conversely, an ester of penta, hexa, or the like, having a high lipophilic property is not likely to be precipitated; however, it has a low hydrophilic property, and therefore has a low effect as a surfactant.

Thus, to keep an appropriate dispersion stability of the slurry in which the primary particles obtained in Step 1 are dispersed, the presence of a tetraester having a good balance between a lipophilic property and a hydrophilic property is important. When the ester distribution of the tetraester is less than 10% by mass, the ester distribution of mono, di, or the like becomes large, and a large amount of surfactant in the slurry is precipitated in Step 2, which reduces a dispersion effect, resulting in a large particle size of the primary particles. Further, the water- soluble ethylenically unsaturated monomer used in Step 2 is absorbed in the primary particles non- uniformly; consequently, the resulting water- absorbent resin tends to have a large amount of coarse powder.

An ester of penta, hexa, or the like, having a high lipophilic property has a smaller dispersion stability effect than an ester of mono, di, or the like; however, such an ester has at least an effect as a surfactant. Therefore, when tetra or higher esters are present in an amount exceeding 30% by mass, the water-soluble ethylenically unsaturated monomer used in Step 2 is excessively suspended in the slurry in which the primary particles obtained in Step 1 are dispersed. In addition, since tetra or higher esters have a high lipophilic property and are difficult to absorb in the primary particles obtained in Step 1, it is presumed that the resulting water-absorbent resin are likely to contain fine powder in a large amount.

Examples

Hereinafter, the present invention will be explained with reference to the Synthetic Examples, Examples, and Comparative Examples, but it is not limited thereto.

The water-absorbent resin obtained in the Examples and Comparative Examples were evaluated for the degree of yellow of the thermal discoloration resistance, median particle size, and particle size distribution according to the methods described below.

Degree of Yellow of Thermal Discoloration Resistance

5 g of water-absorbent resin was put in a glass Petri dish (inside diameter: 5 cm, depth: 1.4 cm) to attain a uniform thickness. The particles were heated for 4 hours using a hot air dryer (produced by Advantec) whose internal temperature was set at 140°C. The sample was allowed to cool in a desiccator, and then put in a measurement container (inside diameter: 3.1 cm, depth: 1.3 cm) made of glass. Using a ZE-2000 colormeter (produced by a Nippon Denshoku Industries Co., Ltd.), tristimulus values X, Y, and Z were measured and the degree of yellow was calculated from the following formula.

$$\text{Degree of yellow} = 100 \times (1.28X - 1.06Z)/Y$$

Median Particle Size and Particle Size Distribution

The particle size of the water-absorbent resin was defined as the median particle size and measured as follows, unless otherwise specified. 0.25 g of amorphous silica (Degussa Japan, Sipernat 200) was mixed as a lubricant with 50 g of water-absorbent resin.

JIS- standard sieves having openings of 850 μm, 500 μm, 400 μm, 300 μm, 250 μm, and 180 μm, and a receiving tray were combined in that order from the top.

The above-mentioned water-absorbent resin particles were placed on the top sieve of the combined sieves, and shaken for 20 minutes using a Ro-Tap Sieve Shaker to sort the water-absorbent resin.

After sorting, the mass of the water-absorbent resin remaining on each sieve was calculated as the mass percentage relative to the total mass, and the particle size distribution was obtained based on the results. The mass percentage was integrated in descending order of particle size. Thereby, the relationship between the sieve opening and the integrated value of the mass percentage of the water-absorbent resin remaining on the sieve was plotted on a logarithmic probability paper. By connecting the plots on the probability paper with a straight line, the particle size corresponding to the 50% percentile of the integrated mass percentage was obtained as the median particle size.

Synthesis Example (Synthesis of Sucrose Fatty Acid Ester A)

500 mL of dimethylsulfoxide (hereinafter referred to as "DMSO") was added to a 2-L flask equipped with a stirrer, a thermometer, a pressure reducing device, and a reflux device, and heated to 90°C while stirring. 154.0 g (0.45 mol) of sucrose was added thereto and dissolved. The pressure of the inside of the system was reduced to 70 mmHg, and dehydration was performed for 30 minutes.

The pressure was returned to an ordinary pressure, and 2.0 g (0.014 mol) of potassium carbonate was added. The pressure of the inside of the system was again reduced to 70 mmHg, and dehydration was performed for 10 minutes.

The pressure was returned to an ordinary pressure, and 134.3 g (0.45 mol) of methyl stearate was added. The pressure of the inside of the system was then reduced to 15 mmHg, and an esterification reaction was performed for 3.5 hours. In the reaction, the temperature was 85°C, and DMSO was in a reflux state while boiling.

After the completion of the reaction, 4 g of lactic acid aqueous solution (50% by mass) was added. Subsequently, DMSO was partially diluted to obtain 450 g of reactive product. 400 g of isobutanol and 800 g of aqueous potassium lactate solution (0.3% by mass) were added to the reactive product, and the mixture was stirred at 60°C. The isobutanol phase was extracted with a separating funnel. 800 g of aqueous potassium lactate solution (0.3% by mass) was added to the isobutanol phase, and the mixture was stirred at 60°C, followed by extraction twice. The obtained isobutanol phase was distilled off, thereby obtaining 109.6 g of the target sucrose fatty acid ester A. The ester distribution of the sucrose fatty acid ester A was analyzed using gel permeation chromatography. Table 1 shows the results.

Table 1 shows the ester distribution of the sucrose fatty acid esters used in the Examples and Comparative Examples. The ester distribution of each of the sucrose fatty acid esters was analyzed under the following analysis conditions using gel permeation chromatography.

Analysis Conditions

Device: HLC-8120GPC (produced by Tosoh Corporation.)
Column: 2500 (6.0 mm ID x 15 cm)x4 TSKgel SuperH (by Tosoh Corporation.)
Detector: RI detector
Eluent: tetrahydrofurane
Flow rate: 0.6 ml/min
Column temperature: 40°C
Sample concentration: 5 mg/min
Sample injection amount: 10 μL

Table 1

| | Ester distribution (mass%) | | | | | | |
|---|---|---|---|---|---|---|---|
| | Mono | Di | Tri | Tetra | Penta | Hexa or higher esters | Sum of tetra or higher esters |
| Sucrose fatty acid ester A | 19 | 32 | 28 | 16 | 5 | - | 21 |
| Sucrose fatty acid ester B | 22 | 35 | 28 | 11 | 4 | - | 15 |
| Sucrose fatty acid ester C12 | 21 | 30 | 19 | 10 | 8 | 12 | 30 |
| Sucrose fatty acid ester D | 24 | 37 | 25 | 12 | 2 | - | 14 |
| Sucrose fatty acid ester E | 30 | 31 | 23 | 12 | 4 | - | 16 |
| Sucrose fatty acid ester F | 23 | 37 | 29 | 8 | 3 | - | 11 |

(continued)

| | Ester distribution (mass%) | | | | | | |
|---|---|---|---|---|---|---|---|
| | Mono | Di | Tri | Tetra | Penta | Hexa or higher esters | Sum of tetra or higher esters |
| Sucrose fatty acid ester G | 21 | 32 | 25 | 8 | 6 | 8 | 22 |
| Sucrose fatty acid ester H | 16 | 24 | 22 | 15 | 10 | 13 | 38 |
| Sucrose fatty acid ester I | 28 | 22 | 13 | 6 | 2 | 29 | 37 |

Example 1

A 2-L cylindrical, round-bottomed, separable flask equipped with a stirrer, two-stage paddle blades, a reflux condenser, a dropping funnel, and a nitrogen gas inlet tube was provided. 340 g of n-heptane was put in the flask, and 0.92 g of sucrose stearic acid ester A (Synthesis Example) and 0.92 g of a maleic anhydride-modified ethylene-propylene copolymer (Hi-wax 1105A produced by Mitsui Chemicals, Inc.,) were added thereto. The temperature was raised to 80°C while stirring to dissolve the surfactant, and then cooled to 50°C.
92 g of acrylic acid aqueous solution (80% by mass, 1.02 mol) was put in an Erlenmeyer flask (500 ml). 146.0 g of sodium hydroxide aqueous solution (21% by mass) was added dropwise thereto under external cooling to neutralize 75 % by mol. 0.11 g of potassium persulfate (0.41 mmol) as a radical polymerization initiator and 9.2 mg of N,N'-methylenebisacrylamide (0.06 mmol) as an internal crosslinking agent were added, and dissolved, thereby preparing an aqueous monomer solution for Step 1.
The total amount of the aqueous monomer solution for Step 1 was added to the separable flask. After fully replacing the inside of the system with nitrogen, the flask was immersed in a water bath at 70°C to raise the temperature. The polymerization of Step 1 was performed for 30 minutes, thereby obtaining a slurry for Step 1.
Separately, 128.8 g of acrylic acid aqueous solution (80% by mass, 1.43 mol) was put in an Erlenmeyer flask (500 ml). 159.0 g of sodium hydroxide aqueous solution (27% by mass) was added dropwise thereto under external cooling to neutralize 75 % by mol. 0.16 g of potassium persulfate (0.59 mmol) as a radical polymerization initiator and 12.9 mg of N,N'-methylenebisacrylamide (0.08 mmol) as an internal crosslinking agent were added and dissolved, thereby preparing an aqueous monomer solution for Step 2.
The slurry for Step 1 was cooled to 22°C, and the aqueous monomer solution for Step 2 having the same temperature was added to the inside of the system. After performing absorption for 30 minutes while sufficiently replacing the inside of the system with nitrogen, the flask was again immersed in a water bath at 70°C to raise the temperature. The polymerization of Step 2 was performed for 30 minutes.
After the polymerization of Step 2, the temperature of the polymerization reaction solution was raised using an oil bath at 120°C, and water and n-heptane were removed by distillation. Thereafter, the resultant was dried for 30 minutes, thereby obtaining 229.2 g of water-absorbent resin in the form of agglomeration of spherical particles. Table 2 shows the measurement results of each property.

Example 2

A 2-L cylindrical round-bottomed separable flask equipped with a stirrer, two-stage paddle blades, a reflux condenser, a dropping funnel, and a nitrogen gas inlet tube was provided. 340 g of n-heptane was put in the flask, and 0.92 g of sucrose stearic acid ester B (the sucrose stearic acid ester A of the Synthetic Example and SE-370 produced by Hangzhou Right Chemical Co., Ltd., were mixed at 50 : 50 (mass ratio)), and 0.92 g of a maleic anhydride-modified ethylene-propylene copolymer (Hi-wax 1105A produced by Mitsui Chemicals, Inc.) were added thereto. The temperature was raised to 80°C while stirring to dissolve the surfactant, and then cooled to 50°C.
92 g of acrylic acid aqueous solution (80% by mass, 1.02 mol) was put in an Erlenmeyer flask (500 ml). 146.0 g of sodium hydroxide aqueous solution (21% by mass) was added dropwise thereto under external cooling to neutralize 75 % by mol. 0.11 g of potassium persulfate (0.41 mmol) as a radical polymerization initiator and 9.2 mg of N,N'-methylenebisacrylamide (0.06 mmol) as an internal-crosslinking agent were added, and dissolved, thereby preparing an aqueous monomer solution for Step 1.
The total amount of the aqueous monomer solution for Step 1 was added to the separable flask. After sufficiently replacing the inside of the system with nitrogen, the flask was immersed in a water bath at 70°C to raise the temperature.

The polymerization of Step 1 was performed for 30 minutes, thereby obtaining a slurry for Step 1.

Separately, 128.8 g of acrylic acid aqueous solution (80% by mass, 1.43 mol) was put in an Erlenmeyer flask (500 ml) . 159.0 g of sodium hydroxide aqueous solution (27% by mass) was added dropwise thereto under external cooling to neutralize 75 % by mol. 0.16 g of potassium persulfate (0.59 mmol) as a radical polymerization initiator and 12.9 mg of N, N'- methylenebisacrylamide (0.08 mmol) as an internal- crosslinking agent were added, and dissolved, thereby preparing an aqueous monomer solution for Step 2.

To keep the slurry for Step 1 in a state such that the surfactant is dissolved, the slurry for Step 1 was added to the inside of the system of the aqueous monomer solution for Step 2 in such a manner that the temperature of the slurry did not become 40°C or less. Subsequently, the inside of the reaction system was cooled to 24°C, and the surfactant was partially precipitated. While keeping such a state, stirring was performed for 30 minutes and the inside of the system was sufficiently replaced with nitrogen. Thereafter, the flask was again immersed in a water bath at 70°C to raise the temperature. The polymerization of Step 2 was then performed for 30 minutes.

After the polymerization of Step 2, the temperature of the polymerization reaction solution was raised using an oil bath at 120°C, and water and n-heptane were removed by distillation. Thereafter, the resultant was dried for 30 minutes, thereby obtaining 232.3 g of water-absorbent resin in the form of agglomeration of spherical particles. Table 2 shows the measurement results of each property.

Example 3

A 2-L cylindrical round-bottomed separable flask equipped with a stirrer, two-stage paddle blades, a reflux condenser, a dropping funnel, and a nitrogen gas inlet tube was provided. 340 g of n-heptane was put in the flask, and 0.92 g of sucrose stearic acid ester C (Ryoto sugar ester S-270 produced by Mitsubishi Kagaku Foods Corporation and S-30 produced by Zhejiang Deyer Chemicals. Co., Ltd., were mixed at 50 : 50 (mass ratio)), and 0.92 g of a maleic anhydride-modified ethylene-propylene copolymer (Hi-wax 1105A produced by Mitsui Chemicals, Inc.) were added thereto. The temperature was raised to 80°C while stirring to dissolve the surfactant, and then cooled to 50°C.

92 g of acrylic acid aqueous solution (80% by mass, 1.02 mol) was put in an Erlenmeyer flask (500 ml). 146.0 g of sodium hydroxide aqueous solution (21% by mass) was added dropwise thereto under external cooling to neutralize 75 % by mol. 0.11 g of potassium persulfate (0.41 mmol) as a radical polymerization initiator and 9.2 mg of N,N'-methylenebisacrylamide (0.06 mmol) as an internal-crosslinking agent were added, and dissolved, thereby preparing an aqueous monomer solution for Step 1.

The total amount of the aqueous monomer solution for Step 1 was added to the separable flask. After sufficiently replacing the inside of the system with nitrogen, the flask was immersed in a water bath at 70°C to raise the temperature. The polymerization of Step 1 was performed for 30 minutes, thereby obtaining a slurry for Step 1.

Separately, 128.8 g of acrylic acid aqueous solution (80% by mass, 1.43 mol) was put in an Erlenmeyer flask (500 ml) . 159.0 g of sodium hydroxide aqueous solution (27% by mass) was added dropwise thereto under external cooling to neutralize 75 % by mol. 0.16 g of potassium persulfate (0.59 mmol) as a radical polymerization initiator and 12.9 mg of N, N'- methylenebisacrylamide (0.08 mmol) as an internal- crosslinking agent were added, and dissolved, thereby preparing an aqueous monomer solution for Step 2.

The slurry for Step 1 was cooled to 35°C, and the cooled aqueous monomer solution for Step 2 was added to the inside of the system to adjust the final temperature of the reaction system to 18°C. The surfactant was partially precipitated. While keeping such a state, stirring was performed for 30 minutes and the inside of the system was sufficiently replaced with nitrogen. Thereafter, the flask was again immersed in a water bath at 70°C to raise the temperature, and the polymerization of Step 2 was performed for 30 minutes.

After the polymerization of Step 2, the temperature of the polymerization reaction solution was raised using an oil bath at 120°C. Azeotropic distillation of n-heptane and water was used to remove 220 g of water from the system while making the n-heptane reflux. Thereafter, 8.17 g of ethylene glycol diglycidyl ether aqueous solution (2% by mass, 0.94 mmol) was added, and a post-crosslinking reaction was performed at 80°C for 2 hours. Then, the temperature of the polymerization reaction solution was raised using an oil bath at 120°C, and n-heptane was evaporated. The resultant was then dried for 30 minutes, thereby obtaining 228.7 g of water-absorbent resin in the form of agglomeration of spherical particles. Table 2 shows the measurement results of each property.

Example 4

The same procedure as in Example 3 was repeated except that the sucrose fatty acid ester C used in Example 3 was changed to sucrose fatty acid ester D (sucrose fatty acid ester A of Synthesis Example and S-30 produced by Zhejiang Deyer Chemicals. Co., Ltd., were mixed at 50 : 50) and the temperature of the inside of the system in which the surfactant was precipitated was adjusted to 25°C, thereby obtaining 231.8 g of water-absorbent resin in the form of agglomeration of spherical particles. Table 2 shows the measurement results of each property.

Comparative Example 1

The same procedure as in Example 1 was repeated except that the sucrose fatty acid ester A used in Example 1 was changed to sucrose fatty acid ester E (sucrose fatty acid ester A of Synthesis Example and DK ester F-50 produced by Dai-ichi Kogyo Seiyaku Co., Ltd., were mixed at 50 : 50 (mass ratio)) and the slurry for Step 1 was cooled to 23°C, thereby obtaining 229.6 g of water-absorbent resin in the form of agglomeration of spherical particles. Table 2 shows the measurement results of each property.

Comparative Example 2

The same procedure as in Example 2 was repeated except that the sucrose fatty acid ester B used in Example 2 was changed to sucrose fatty acid ester F (sucrose fatty acid ester A of Synthesis Example and SE-370 produced by Hangzhou Right Chemical Co., Ltd., were mixed at 20 : 80 (mass ratio)), and the temperature of the reaction system in which the surfactant was precipitated was adjusted to 27°C, thereby obtaining 227.1 g of water-absorbent resin in the form of agglomeration of spherical particles. Table 2 shows the measurement results of each property.

Comparative Example 3

The same procedure as in Example 3 was repeated except that the sucrose fatty acid ester C used in Example 3 was changed to sucrose fatty acid ester G (SE-370 produced by Hangzhou Right Chemical Co., Ltd., and Ryoto Sugar Ester S-270 produced by Mitsubishi Chemical Foods Co., Ltd., were mixed at 70 : 30 (mass ratio)), and the temperature of the reaction system in which the surfactant was precipitated was adjusted to 25°C, thereby obtaining 219.7 g of water-absorbent resin in the form of agglomeration of spherical particles. Table 2 shows the measurement results of each property.

Comparative Example 4

The same procedure as in Example 3 was repeated except that the sucrose fatty acid ester C used in Example 3 was changed to sucrose fatty acid ester H (sucrose fatty acid ester A of Synthesis Example and Ryoto Sugar Ester S-270 produced by Mitsubishi Chemical Foods Co., Ltd., were mixed at 50 : 50 (mass ratio)), and the temperature of the reaction system in which the surfactant was precipitated was adjusted to 16°C, thereby obtaining 230.9 g of water-absorbent resin in the form of agglomeration of spherical particles. Table 2 shows the measurement results of each property.

Comparative Example 5

The same procedure as in Example 3 was repeated except that the sucrose fatty acid ester C used in Example 3 was changed to sucrose fatty acid ester I (DK ester F-50 produced by Dai-ichi Kogyo Seiyaku Co., Ltd., and SEFOSE-1618H produced by Procter and Gamble were mixed at 70 : 30 (mass ratio)), and the temperature of the reaction system in which the surfactant was precipitated was adjusted to 14°C, thereby obtaining 229.5 g of water-absorbent resin in the form of agglomeration of spherical particles. Table 2 shows the measurement results of each property.
Table 2

| | Median particle size (μm) | More than 850 μm | More than 500 μm, not more than 850 μm | More than 400 μm, not more than 500 μm | More than 300 μm, not more than 400 μm | More than 250 μm, not more than 300 μm | More than 180 μm, not more than 250 μm | Not more than 180 μm | More than 250 μm, not more than 500 μm | Degree of yellow of thermal discoloration resistance |
|---|---|---|---|---|---|---|---|---|---|---|
| Example 1 | 357 | 2.0 | 9.9 | 23.0 | 38.5 | 16.6 | 7.7 | 2.3 | 78.1 | 10 |
| Example 2 | 413 | 3.0 | 18.6 | 33.1 | 32.3 | 8.4 | 4.0 | 0.6 | 73.8 | 12 |

(continued)

| | Median particle size ($\mu$m) | More than 850 $\mu$m | More than 500 $\mu$m, not more than 850 $\mu$m | More than 400 $\mu$m, not more than 500 $\mu$m | More than 300 $\mu$m, not more than 400 $\mu$m | More than 250 $\mu$m, not more than 300 $\mu$m | More than 180 $\mu$m, not more than 250 $\mu$m | Not more than 180 $\mu$m | More than 250 $\mu$m, not more than 500 $\mu$m | Degree of yellow of thermal discoloration resistance |
|---|---|---|---|---|---|---|---|---|---|---|
| Example 3 | 278 | 0.3 | 1.3 | 9.2 | 29.0 | 23.9 | 29.8 | 6.5 | 62.1 | 11 |
| Example 4 | 400 | 2.2 | 17.5 | 30.3 | 27.6 | 8.1 | 5.2 | 9.1 | 66.0 | 15 |
| Comparative Example 1 | 391 | 4.7 | 16.2 | 26.7 | 31.7 | 11.5 | 6.1 | 3.1 | 69.9 | 32 |
| Comparative Example 2 | 529 | 11.9 | 42.5 | 29.9 | 12.9 | 1.5 | 1.1 | 0.2 | 44.3 | 14 |
| Comparative Example 3 | 452 | 5.4 | 29.6 | 33.0 | 20.8 | 5.1 | 3.4 | 2.7 | 58.9 | 11 |
| Comparative Example 4 | 240 | 3.8 | 7.4 | 8.4 | 12.9 | 14.2 | 26.4 | 26.9 | 35.5 | 10 |
| Comparative Example 5 | 184 | 0.4 | 8.7 | 8.7 | 9.4 | 6.1 | 13.9 | 49.2 | 24.2 | 28 |

As is clear from Table 2, the water-absorbent resin obtained in Examples 1 to 4 had reduced discoloration resulting from high-temperature treatment, small amounts of fine powder and coarse powder, and a small particle size distribution.

In contrast, the sucrose fatty acid esters used in the Comparative Examples that have a large amount of monoester in the ester distribution (Comparative Examples 1 and 5) had a high degree of yellow of thermal discoloration resistance. The sucrose fatty acid esters having a small amount of tetra ester in the ester distribution (Comparative Examples 2 and 3) had a large amount of coarse powder and a wide particle size distribution. Conversely, the sucrose fatty acid esters having a large amount of tetra or higher esters (Comparative Examples 4 and 5) had a large amount of fine powder and a wide particle size distribution.

Industrial Applicability

Since the water-absorbent resin obtained by using the method of the present invention have reduced discoloration resulting from high-temperature treatment, small amounts of fine powder and coarse powder, and a narrow particle size distribution, they can be suitably used in sanitary napkins or disposable diapers having a reduced thickness.

**Claims**

1. A method for producing water-absorbent resin, comprising:

    (1) Step 1, in which a water-soluble ethylenically unsaturated monomer is subjected to a reversed-phase suspension polymerization in a petroleum hydrocarbon dispersion medium in which a surfactant is dissolved, thereby forming a slurry in which primary particles are dispersed, and
    (2) Step 2, in which the slurry obtained in Step 1 is cooled to partially precipitate the surfactant, and then a water-soluble ethylenically unsaturated monomer is polymerized in the slurry to agglomerate the primary particles, thereby forming water-absorbent resin,

    wherein the surfactant is a sucrose fatty acid ester in which the monoester content is 25% by mass or less, the tetraester content is 10% by mass or more, and the content of tetra or higher esters is 30% by mass or less.

2. The method according to claim 1, wherein the petroleum hydrocarbon dispersion medium further comprises at least one polymeric dispersion agent selected from the group consisting of maleic anhydride modified polyethylene, maleic anhydride modified polypropylene, maleic anhydride modified ethylene propylene copolymers, oxidized polyethylene, and ethylene acrylic acid copolymers.

3. The method according to claim 1 or 2, wherein the water-soluble ethylenically unsaturated monomer is at least one member selected from the group consisting of (meth)acrylic acids and salts thereof.

4. Water-absorbent resin obtainable by using the method according to any one of claims 1 to 3, wherein the degree of yellow of thermal discoloration resistance is 20 or less.

5. Water-absorbent resin obtainable by using the method according to any one of claims 1 to 3, wherein, in a particle size distribution, water-absorbent resin having a size more than 850 $\mu$m is contained in an amount of 5% by mass or less and water-absorbent resin having a size not more than 180 $\mu$m is contained in an amount of 10% by mass or less.

## INTERNATIONAL SEARCH REPORT

| International application No. |
| --- |
| PCT/JP2011/076555 |

A. CLASSIFICATION OF SUBJECT MATTER
*C08F2/18*(2006.01)i, *C08F2/32*(2006.01)i, *C08F20/06*(2006.01)i

According to International Patent Classification (IPC) or to both national classification and IPC

B. FIELDS SEARCHED

Minimum documentation searched (classification system followed by classification symbols)
C08F2/18, C08F2/32, C08F20/06

Documentation searched other than minimum documentation to the extent that such documents are included in the fields searched
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 61-087702 A (Seitetsu Kagaku Kogyo Co., Ltd.), 06 May 1986 (06.05.1986), claims; examples & US 4683274 A & EP 176664 A1 & ES 543475 A1 & CA 1235847 A & DK 241485 A & MX 166523 B & KR 10-1989-0002561 B1 & CN 85107374 B | 1-5 |
| A | JP 7-070245 A (The Nippon Synthetic Chemical Industry Co., Ltd.), 14 March 1995 (14.03.1995), claims (Family: none) | 1-5 |

| ☒ Further documents are listed in the continuation of Box C. | ☐ See patent family annex. |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 29 November, 2011 (29.11.11) | Date of mailing of the international search report 13 December, 2011 (13.12.11) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/076555 |

C (Continuation).　DOCUMENTS CONSIDERED TO BE RELEVANT

| Category* | Citation of document, with indication, where appropriate, of the relevant passages | Relevant to claim No. |
| --- | --- | --- |
| A | WO 2007/126003 A1　(Sumitomo Seika Chemicals Co., Ltd.), 08 November 2007 (08.11.2007), claims; examples & US 2009/0182092 A1　　& EP 2014683 A1 & KR 10-2009-0017543 A　& CN 101479297 A | 1-5 |
| A | WO 2007/123188 A1　(Sumitomo Seika Chemicals Co., Ltd.), 01 November 2007 (01.11.2007), claims; examples & US 2009/0281247 A1　　& EP 2011803 A1 & CN 101466740 A | 1-5 |

Form PCT/ISA/210 (continuation of second sheet) (July 2009)

**EP 2 653 483 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006001976 A

- JP H3227301 B